# EUROPÄISCHE PATENTSCHRIFT

(11) **EP 1 738 823 B1**
(45) Veröffentlichungstag und Bekanntmachung des Hinweises auf die Patenterteilung: **25.07.2012**
(21) Anmeldenummer: 06010890.9
(22) Anmeldetag: 24.05.2006
(51) Int. Cl.: B01J 31/16, B01J 31/06, A62D 5/00, A62D 9/00, B01D 39/16, B01J 35/00, B01J 35/02, B01J 35/06

(54) **Trägermaterial mit katalytisch aktiven Polymerpartikeln**
Carrier material with catalytically active polymer particles
Matériau de support avec particules polymères à acitivité catalytique

(30) Priorität: 28.06.2005 DE 102005030461; 25.08.2005 DE 102005040189
(43) Veröffentlichungstag der Anmeldung: 03.01.2007
(73) Patentinhaber: Blücher GmbH, 40699 Erkrath (DE)
(72) Erfinder: Böhringer, Bertram, Dr., 42115 Wuppertal (DE)
(74) Vertreter: Gesthuysen, von Rohr & Eggert

(56) Entgegenhaltungen:
- EP-A- 1 468 732
- DE-A1- 19 507 229
- US-A1- 2003 013 369

## Beschreibung

Die vorliegende Erfindung betrifft eine katalytisch aktive Einheit mit einem Trägermaterial mit katalytisch aktiven Polymerpartikeln, insbesondere Nanopartikeln, und deren Verwendung insbesondere für die zivile und militärische Anwendung, z. B. im Bereich des ABC-Schutzes, der Luftreinigung, der Filteranwendungen und dergleichen. Des weiteren betrifft die vorliegende Erfindung unter Verwendung der erfmdungsgemäßen katalytisch aktiven Einheit hergestellte Schutzmaterialien aller Art. Schließlich betrifft die vorliegende Erfindung Filter und Filtermaterialien, die unter Verwendung der erfindungsgemäßen katalytisch aktiven Einheit hergestellt sind bzw. diese umfassen.

Es gibt eine Reihe von Stoffen, die von der Haut aufgenommen werden und zu schweren körperlichen Schäden führen. Als Beispiele seien chemische Kampfstoffe, wie z. B. das blasenziehende Lost (Gelbkreuz) und das Nervengift Sarin, erwähnt. Menschen, die mit solchen Giften in Kontakt kommen können, müssen eine geeignete Schutzausrüstung tragen bzw. durch geeignete Schutzmaterial gegen diese Gifte geschützt werden.

Was die Luftreinigung bzw. Bereitstellung oder Aufbereitung von Luft, Gasen bzw. Gasgemischen, beispielsweise zur Schaffung eines besseren Raumklimas bzw. zur Schaffung von Reinluft, insbesondere auch für den technischen Bereich, betrifft, so ist durch ein stetig steigendes Umweltbewußtsein sowie durch hochempfindliche Analysemethoden die Belastung der Umwelt durch Schadstoffe immer mehr ins Licht der Öffentlichkeit gerückt. Die zunehmende Industrialisierung hat zudem zu einer weiträumigen Verschmutzung der Atmosphäre geführt. Jede Art von Verbrennungsvorgang, z. B. in Kraftwerken, von Automobilmotoren, durch Heizen etc., führt zu unerwünschten Verbrennungsprodukten, insbesondere zu oxidierten Kohlenstoffverbindungen, Stickoxiden, unvollständig verbrannten Kohlenwasserstoffen und dergleichen. Daneben gibt es Schadstoffbelastungen durch kontaminierte Räume, in denen schadstoffbelastete Materialien verbaut sind (z. B. PCB-belastete Baustoffe etc.). Auch von Möbelstücken, Wandanstrichen, Teppichbodenklebern und dergleichen können Giftstoffe freigesetzt werden.

Daher besteht insgesamt ein großer Bedarf, verschiedenartigste luftverschmutzende Substanzen, insbesondere schädigende bzw. störende Schad-, Gift- oder Geruchsstoffe, aus der Luft zu entfernen. Hierzu gibt es im Stand der Technik eine Reihe von Verfahren, um solche Substanzen zu entfernen. Beispielsweise seien hier mechanische Filterungsverfahren, Umsetzung bzw. Zersetzung der störenden bzw. schädigenden Substanzen sowie Absorptions- und Adsorptionsverfahren genannt.

Bei den Adsorptionsverfahren kommen adsorptiv wirkende Filtereinheiten zum Einsatz. Das Problem hierbei ist oftmals, daß die aus dem Stand der Technik bekannten Filtereinheiten eine nicht immer ausreichende Adsorptionskapazität gewährleisten, die relativ schnell erschöpft ist, so daß die Filtermaterialien ausgetauscht werden müssen, um Durchbrüche zu vermeiden. Oftmals ist zudem die Adsorptionsleistung nicht ausreichend.

Die US 2003/0013369 A1 betrifft textilreaktive Nanopartikel, welche mit spezifischen, in einer Polymerkapsel eingeschlossenen bzw. eingebrachten Moleküle beladen sind, wobei die Polymerkapsel mindestens eine textilreaktive funktionelle Gruppe auf ihrer Oberfläche zur Bindung an einer Textilfaser aufweist.

Die DE 195 07 229 A1 betrifft ein Verfahren zum Bedrucken von Geweben aus Naturfasern oder von Geweben mit überwiegendem Naturfaseranteil mit einer wasserlöslichen Direktdruckfarbe, wobei zunächst die zu bedruckenden Gewebeoberflächen in der Weise ausgerüstet bzw. vorbehandelt werden sollen, daß auf die Oberflächen des Gewebes ein von natürlichen Harzen freier Lack aufgetragen werden soll, welcher die wasserlösliche Direktdruckfarbe aufnehmen und fixieren soll. Diesbezüglich kann zur Vorbehandlung ein Ormocer-Lack eingesetzt werden.

Die EP 1 468 732 A2 betrifft ein mehrschichtiges Adsorptionsfiltermaterial mit einer Adsorptionsschicht. Die Adsorptionsschicht weist neben korn- und/oder kugelförmiger Aktivkohle zusätzlich Aktivkohlefasern auf.

Die Aufgabe der vorliegenden Erfindung besteht somit in der Bereitstellung einer katalytisch aktiven Einheit, welche die zuvor geschilderten Nachteile des Standes der Technik zumindest teilweise vermeidet oder aber wenigstens abschwächt. Insbesondere sollte eine solche katalytisch aktive Einheit aufgrund ihrer katalytischen Aktivität in der Lage sein, insbesondere Schad-, Geruchs- bzw. Giftstoffe aller Art, unter anderem chemische und biologische Gift- und Kampfstoffe, beispielsweise aus Luft, Gasen bzw. Gasgemischen, zu entfernen bzw. diese katalytisch zu zersetzen, wobei eine Erschöpfung der katalytisch aktiven Einheit zumindest im wesentlichen vermieden werden soll. Weiterhin soll die katalytisch aktive Einheit zur Verwendung im Rahmen der Herstellung von Schutzmaterialien aller Art, wie beispielsweise Schutzanzügen und dergleichen, geeignet sein, wobei insbesondere im Fall von Schutzanzügen für den Träger ein effektiver Schutz insbesondere gegenüber Schad-, Geruchs- bzw. Giftstoffen aller Art, wie chemischen Gift- bzw. Kampfstoffen, bei gleichzeitig hohem Tragekomfort gewährleistet sein soll.

Weiterhin besteht eine Aufgabe der vorliegenden Erfindung darin, eine katalytisch aktive Einheit bereitzustellen, welche sich gleichermaßen zur Reinigung von Luft, Gasen bzw. Gasgemischen, eignet. Dabei soll die katalytisch aktive Einheit insbesondere zur Herstellung hochreiner Luft bzw. zur Entfernung von Gas-, Geruchs- oder Giftstoffen aus Luft- bzw. Gasströmen, beispielsweise in (Be-)Lüftungsanlagen, Ventilationssystemen, Klimaanlagen oder dergleichen, geeignet sein. Insbesondere soll die katalytisch aktive Einheit zur Verwendung im Rahmen der Herstellung von Filtern und Filtermaterialien aller Art, wie ABC-Schutzmaskenfiltern, Geruchsfiltern, Flächenfiltern, Luftfiltern und dergleichen, geeignet sein.

Wiederum eine weitere Aufgabe der vorliegenden Erfindung besteht in der Bereitstellung von Schutzmaterialien aller Art, insbesondere Schutzbekleidung, wie Schutzanzüge und dergleichen, insbesondere für den zivilen oder militärischen Bereich, welche die katalytisch aktive Einheit nach der Erfindung enthält bzw. hieraus besteht.

Schließlich besteht eine weitere Aufgabe der vorliegenden Erfindung in der Bereitstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter und dergleichen, welche die katalytisch aktive Flächeneinheit nach der Erfindung aufweisen bzw. hieraus bestehen.

Das der vorliegenden Erfindung zugrundeliegende Problem wird durch eine katalytisch aktive Einheit nach Anspruch 1 sowie deren Verwendung zur Herstellung von Schutzmaterialien bzw. zur Herstellung von Filtern und Filtermaterialien gemäß Anspruch 8 gelöst. Weiterhin wird das der vorliegenden Erfindung zugrundeliegende Problem durch das die erfindungsgemäße katalytische Einheit enthaltende Schutzmaterialien gemäß Patentanspruch 9 sowie Filter und Filtermaterialien gemäß Patentanspruch 10, welche die erfindungsgemäße katalytisch aktive Einheit aufweisen, gelöst. Weitere, vorteilhafte Ausgestaltungen sind Gegenstand der jeweiligen Unteransprüche.

Gegenstand der vorliegenden Erfindung - gemäß einem ersten Aspekt der vorliegenden Erfindung - ist somit eine katalytisch aktive Einheit, umfassend ein textiles Flächenmaterial als Trägermaterial, wobei das Trägermaterial Polymerpartikel umfaßt und/oder mit Polymerpartikeln beaufschlagt ist,
wobei die Polymerpartikel mindestens eine katalytisch aktive Komponente, ausgewählt aus Enzymen und/oder Metallen und/oder deren Ionen und/oder Salzen, umfassen und wobei die Polymerpartikel mindestens ein anorganisch-organisches Hybridpolymer umfassende polymere Nanopartikel mit einem Durchmesser von 1 nm bis 1.000 nm sind, wobei das anorganisch-organische Hybridpolymer, sowohl anorganische als auch organische Struktureinheiten aufweist und ein organische Quervernetzungen und/oder organische Gruppen aufweisendes anorganisches Silikatnetzwerk mit Siliciumalkoxiden und/oder (Si-O-Si)-Einheiten umfaßt, und
wobei die katalytische Einheit zusätzlich ein chemische Gifte adsorbieendes Adsorbens auf Basis von Aktivkohle, insbesondere in Form von Aktivkohleteilchen oder Aktivkohlefasern, umfaßt.

Mit anderen Worten besteht eine Besonderheit der erfindungsgemäßen katalytisch aktiven Einheit darin, daß sie über katalytische Eigenschaften verfügt und somit zur Eliminierung bzw. Entfernung auf Basis von katalytischen Zersetzungsprozessen von Schad-, Geruchs- und Giftstoffen aller Art, insbesondere aus Luft- bzw. Gasströmen, geeignet ist. Dies wird erfindungsgemäß dadurch erreicht, daß die katalytisch aktive Einheit, insbesondere das Trägermaterial, Polymerpartikel, insbesondere polymere Nanopartikel, mit mindestens einer katalytisch aktiven Komponente (d. h. also mit einem Katalysator) aufweist.

Was das zur Aufnahme der Polymerpartikel bestimmte Trägermaterial als solches betrifft, so ist dieses flächig bzw. zumindest im wesentlichen zweidimensional ausgebildet. Mit anderen Worten ist das erfindungsgemäß eingesetzte Trägermaterial ein Flächengebilde.

Erfindungsgemäß handelt es sich bei dem verwendeten Trägermaterial um ein textiles Flächengebilde. Nichtbeschränkende Beispiele sind textile Gewebe, textile Gewirke, textile Gestricke, textile Gelege, textile Verbundstoffe, wie Vliese und dergleichen. Erfindungsgemäß ist es aber gleichermaßen denkbar, daß das Trägermaterial ein Nonwoven ist.

Das Flächengewicht des Trägermaterials sollte 25 bis 500 g/m², insbesondere 30 bis 250 g/m², vorzugsweise 35 bis 200 g/m², betragen. Die Wahl des Flächengewichtes ist von der jeweiligen Anwendung der erfindungsgemäßen katalytisch aktiven Einheit abhängig. So eignen sich beispielsweise für Schutzanzüge, insbesondere wenn die katalytisch aktive Einheit als alleiniges Material eingesetzt wird, vorzugsweise hohe Flächengewichte. Der Fachmann ist jederzeit in der Lage, die entsprechenden Flächengewichte an die jeweilige Verwendung anzupassen.

Gemäß einer ersten Ausgestaltung der erfindungsgemäßen katalytischen Einheit kann - insbesondere zur Gewährleistung einer hohen Luftdurchsatzrate, wie sie beispielsweise bei Filtern oder Filtermaterialien gewünscht sein kann-das erfindungsgemäß verwendete Trägermaterial vorzugsweise gasdurchlässig, insbesondere luftdurchlässig ausgebildet sein. Weiterhin kann das Trägermaterial gemäß dieser Ausführungsform wasserdurchlässig und/oder wasserdampfdurchlässig ausgebildet sein. Diese erfindungsgemäße Ausführungsform ist insbesondere dann bevorzugt, wenn die erfindungsgemäße katalytisch aktive Einheit im Rahmen von Filter und Filtereinheiten eingesetzt wird, da hier Gase bzw. Luft unter hohen Durchsatzraten gereinigt werden sollen.

Was die gemäß der ersten Ausgestaltung vorgesehene Luftdurchlässigkeit der erfindungsgemäßen katalytisch aktiven Einheit betrifft, so sollte diese - gemessen nach DIN 53887 - mehr als 200 l/m² pro Sekunde, vorzugsweise mehr als 300 l/m² pro Sekunde, bevorzugt mehr als 400 l/m² pro Sekunde, besonders bevorzugt mehr als 600 l/m² pro Sekunde, ganz besonders bevorzugt mehr als 800 l/m² pro Sekunde, betragen. Eine hohe Luftdurchlässigkeit ist insbesondere insofern vorteilhaft, als die erfindungsgemäße katalytisch aktive Einheit besonders gut von Gasen bzw. Luft um- bzw. durchströmt werden kann, so daß - insbesondere in bezug auf die Verwendung als Filter bzw. Filtermaterial - hohe Durchsatzraten und - damit verbunden - eine hohe katalytische Leistung erreicht werden kann.

Gemäß einer alternativen, zweiten Ausgestaltung kann das Trägermaterial als solches gasundurchlässig, insbesondere luftundurchlässig und/oder wasserundurchlässig ausgebildet sein, wobei das Trägermaterial gemäß dieser Ausführungsform vorzugsweise wasserdampfdurchlässig ausgebildet ist. Diese Ausführungsform kommt insbesondere für einen Einsatz der erfindungsgemäßen katalytisch aktiven Einheit beispielsweise für Schutzmaterialien in Betracht, insbesondere für Schutzanzüge aller Art, da durch die Gas- bzw. Luftundurchlässigkeit einerseits und die Wasserundurchlässigkeit andererseits ein zusätzlicher Schutz vor Kampf- bzw. Giftstoffen erreicht wird, wobei schließlich aufgrund der Wasserdampfdurchlässigkeit ein hoher Tragekomfort gewährleistet ist. Zur Gewährleistung beispielsweise eines hohen Tragekomforts-insbesondere bei der Verwendung der erfindungsgemäßen katalytisch aktiven Einheit in oder als Schutzmaterialien - kann die erfindungsgemäße katalytisch aktive Einheit bei 25 °C eine Wasserdampfdurchlässigkeit von mindestens 15 l/m² pro 24 h, insbesondere 20 l/m² pro 24 h, vorzugsweise mindestens 25 l/m² pro 24 h, besonders bevorzugt mindestens 30 l/m² pro 24 h oder sogar mehr, aufweisen (gemessen nach der "Methode des umgekehrten Bechers" bzw. "Invertet Cup Method" nach ASTM E 96 und bei 25 °C) (Zu weiteren Einzelheiten zur Messung der Wasserdampfdurchlässigkeit [Water Vapour Transmission, WVT] vgl. auch McCullough et al. "A comparison of standard methods for measuring water vapour permeability of fabrics" in Meas. Sci. Technol. [Measurements Science and Technology] 14, 1402-1408, August 2003*).* Hierdurch wird - wie geschildert - ein besonders hoher Tragekomfort gewährleistet.

Zur Erreichung eines guten Tragekomforts kann die erfindungsgemäße katalytisch aktive Einheit, beispielsweise im Fall der Verwendung in oder als Schutzmaterialien, beispielsweise für Schutzanzüge, zur Erreichung eines guten Tragekomforts zudem einen Wasserdampfdurchgangswiderstand Rₑₜ unter stationären Bedingungen - gemessen nach DIN EN 31 092:1993 vom Februar 1994 ("Textilien - physiologische Wirkungen, Messung des Wärme- und Wasserdampfdurchgangswiderstandes unter stationären Bedingungen (sweating guarded-hotplate test)") bzw. nach gleichlautender internationaler Norm ISO 11 092 - bei 35 °C von höchstens 20 (m² · Pascal)/Watt, insbesondere höchstens 15 (m² · Pascal)/Watt, vorzugsweise höchstens 10 (m² · Pascal)/Watt, besonders bevorzugt höchstens 7 (m² · Pascal)/Watt, aufweisen.

Bei den erfindungsgemäß verwendeten Polymerpartikeln handelt es sich um polymere Nanopartikel bzw. um mindestens ein Polymer enthaltende oder hieraus bestehende Nanopartikel.

Der Durchmesser der Polymerpartikel, insbesondere der polymeren Nanopartikel, kann in weiten Bereichen variieren. Der Durchmesser der erfindungsgemäß verwendeten Polymerpartikel, insbesondere Nanopartikel, beträgt mindestens 1 nm, insbesondere mindestens 5 nm, vorzugsweise mindestens 10 nm, besonders bevorzugt mindestens 75 nm und ganz besonders bevorzugt mindestens 100 nm; der Durchmesser der Polymerpartikel, insbesondere Nanopartikel, beträgt höchstens 1.000 nm, vorzugsweise höchstens 800 nm, bevorzugt höchstens 700 nm, besonders bevorzugt höchstens 600 nm und ganz besonders bevorzugt höchstens 500 nm. Mit anderen Worten weisen die Polymerpartikel, insbesondere die polymeren Nanopartikel, mit welchen insbesondere das Trägermaterial beaufschlagt ist, vorteilhafterweise einen Durchmesser von 1 nm bis 1.000 nm, insbesondere 5 nm bis 900 nm, vorzugsweise 10 nm bis 800 nm, bevorzugt 50 nm bis 700 nm, besonders bevorzugt 75 nm bis 600 nm, ganz besonders bevorzugt 100 nm bis 500 nm, auf. Bei den vorgenannten Durchmesserangaben handelt es sich im Rahmen der vorliegenden Erfindung um statistische Mittelwerte; diesbezüglich sind die Durchmesserangaben derart zu verstehen, daß mindestens 80 %, vorzugsweise 85 %, bevorzugt mindestens 90 % der eingesetzten Polymerteilchen den angegebenen Durchmesserwert aufweisen.

Bei den erfindungsgemäß verwendeten Polymerpartikeln handelt es sich um sogenannte Nanopartikel, welche synonym auch als Nanoteilchen bezeichnet werden. Derartige Nanopartikel bzw. Nanoteilchen weisen spezielle chemische und physikalische Eigenschaften auf: So können Nanopartikel bzw. Nanoteilchen beispielsweise im Vergleich zum Volumen extrem große Teilchenoberflächen aufweisen, so daß diese in Verbindung mit einer katalytisch aktiven Komponente über große reaktive Flächen verfügen. Dies wird im Rahmen der vorliegenden Erfindung dadurch genutzt, daß die Nanopartikel mit einer katalytisch aktiven Komponente beaufschlagt sind bzw. einen Katalysator enthalten.

Im Rahmen der vorliegenden Erfindung wird unter dem Begriff "katalytisch aktive Komponente" - gelegentlich auch nur als "Katalysator" bezeichnet -, eine Substanz oder eine Mehrzahl von Substanzen verstanden, welche den Abbau, insbesondere durch Oxidation, insbesondere chemischer und biologischer Geruchs-, Schad-, Giftstoffe und dergleichen zu induzieren und/oder hervorzurufen und/oder zu beschleunigen imstande sind.

Die erfindungsgemäß reaktive Einheit ist vorzugsweise derart ausgebildet, daß die Polymerpartikel, insbesondere die polymeren Nanopartikel, dauerhaft mit dem Trägermaterial verbunden sind. Dies kann beispielsweise mittels eines insbesondere diskontinuierlich, vorzugsweise punktförmig aufgebrachten Klebstoffs erfolgen. Dabei kann das Trägermaterial mit dem Klebstoff in einem regelmäßigen oder unregelmäßigen Muster bzw. Raster beaufschlagt sein, wobei die Weichheit, Flexibilität bzw. Dehnbarkeit und Luftdurchlässigkeit der erfindungsgemäßen katalytisch aktiven Einheit in einem hohen Maße erhalten bleiben sollte. Erfindungsgemäß ist es aber gleichermaßen möglich, daß das Trägermaterial mit einer kontinuierlichen Klebstoffbeschichtung ausgestattet ist, insbesondere wenn eine luft- bzw. wasserdichte Ausbildung der erfindungsgemäßen katalytisch aktiven Einheit gewünscht ist.

Der Begriff "Beaufschlagung" ist im Rahmen der vorliegenden Erfindung insbesondere derart zu verstehen, daß zumindest eine Seite des flächigen Trägermaterials mit den Polymerpartikeln, insbesondere den Nanopartikeln, ausgestattet wird; zudem kann es erfindungsgemäß auch vorgesehen sein, daß beide Seiten des Trägermaterials mit den Polymerpartikeln, insbesondere den polymeren Nanopartikeln, versehen werden. Aufgrund der Größe der Polymerpartikel, insbesondere der polymeren Nanopartikel, ist es gleichermaßen möglich, daß die Polymerpartikel bei Beaufschlagung des Materials zumindest teilweise in das Trägermaterial eindringen bzw. dieses vollständig mit den Polymerpartikeln durchsetzt wird, so daß eine über die gesamte Dicke des Trägermaterials realisierte innige Verbindung zwischen Trägermaterial einerseits und Polymerpartikeln andererseits vorliegen kann.

Was die Beaufschlagung des Trägermaterials mit den Polymerpartikeln anbelangt, so können die Polymerpartikel grundsätzlich unmittelbar (d. h. direkt bzw. in direktem Kontakt mit dem Trägermaterial) oder aber auch nur mittelbar (d. h. indirekt bzw. ohne direkten Kontakt mit dem Trägermaterial) mit dem Trägermaterial verbunden sein. Unabhängig davon, ob die Beaufschlagung des Trägermaterials mit den Polymerpartikeln mittelbar oder unmittelbar erfolgt, ist es in jedem Fall vorteilhaft, wenn nach Möglichkeit die Fixierung bzw. Anbindung der Polymerpartikel derart erfolgt, daß die Polymerpartikel bzw. deren Oberfläche - zur Gewährleistung einer effizienten katalytischen Aktivität bzw. Wirkung - zu mindestens 50 %, insbesondere zu mindestens 60 %, vorzugsweise zu mindestens 70 %, für Gase, insbesondere Luft und/oder Gift- und/oder Kampfstoffe, frei zugänglich sind bzw. ist.

Wie zuvor und nachfolgend noch beschrieben, kann im Fall der unmittelbaren bzw. direkten Beaufschlagung des Trägermaterials mit den Polymerpartikeln, beispielsweise über einen geeignete Haftmasse, insbesondere einen geeigneten Klebstoff, oder aber z. B. aufgrund ihrer Eigenklebrigkeit, durch chemische Anbindung etc. an das Trägermaterial gebunden bzw. fixiert sein.

Was die zur Fixierung der Polymerpartikel, insbesondere der polymeren Nanopartikel, geeigneten bzw. verwendbaren Klebstoffe betrifft, so sind diese dem Fachmann als solche bekannt. Es können beispielsweise eingedickte Kunststoffdispersionen, Schmelzkleber oder auch Reaktivklebstoffe, wie insbesondere polyurethanbasierte Ein- oder Zweikomponentensysteme, wie beispielsweise maskierte prepolymere Diisocyanate, welche über di- oder polyfunktionelle Amine oder Alkohole vernetzt werden, eingesetzt werden. Erfindungsgemäß vorteilhaft sind solche Kleber, welche im ausgehärteten Zustand atmungsaktiv sind, z. B polyurethanbasierte Klebstoffe. Was die Menge des eingesetzten Klebers betrifft, so kann diese in weiten Bereichen variieren. Die Menge kann beispielsweise derart gewählt sein, daß die Polymerpartikel bzw. deren Oberfläche zur Gewährleistung einer effizienten katalytischen Aktivität bzw. Wirkung zu mindestens 50 %, insbesondere zu mindestens 60 %, vorzugsweise zu mindestens 70 % für Gase, insbesondere Luft und/oder Gift- und/oder Kampfstoffe frei zugänglich sind bzw. ist; mit anderen Worten sollte im Rahmen der vorliegenden Erfindung gewährleistet sein, daß die Polymerpartikel nicht vollständig in den Klebstoff eingedrückt sind bzw. einsinken.

Erfindungsgemäß ist es gleichermaßen möglich, daß die Polymerpartikel, insbesondere die polymeren Nanopartikel, infolge von Adhäsion, insbesondere Eigenadhäsion bzw. Eigenklebrigkeit, mit dem Trägermaterial vorzugsweise dauerhaft verbunden sind. Diesbezüglich ist es erfindungsgemäß beispielsweise möglich, daß die Polymerpartikel bzw. die polymeren Nanopartikel in einem vorpolymerisierten, d. h. noch nicht vollständig vernetzten Zustand, auf das Trägermaterial aufgetragen werden und die vorzugsweise dauerhafte Verbindung aufgrund der nachfolgenden vollständigen Aushärtung bzw. Auspolymerisation der Polymerpartikel realisiert ist. Was die Beaufschlagung des Trägermaterials mit den Polymerpartikeln gemäß dieser Ausführungsform betrifft, so kann diese in situ beispielsweise bei der Herstellung der Partikel bzw. bei der Herstellung des Trägermaterials, insbesondere wenn es sich hierbei um ein Vlies handelt, erfolgen.

Im Falle der mittelbaren Beaufschlagung des Trägermaterials mit den Polymerpartikeln können die Polymerpartikel beispielsweise an Trägerstrukturen, insbesondere Trägerpartikel, gebunden und/oder fixiert sind, wobei die Trägerpartikel wiederum direkt an das Trägermaterial gebunden und/oder fixiert sind, z. B. mittels geeigneten Haftmassen bzw. Klebstoffen; die Beaufschlagung der Trägerstrukturen mit den Polymerpartikeln wiederum kann mit an sich üblichen Methoden erfolgen, wie beispielsweise durch Inkontaktbringen der Trägerstrukturen mit wäßrigen und/oder organischen Dispersionen der Polymerpartikel (z. B. durch Tränken, Imprägnieren, Aufsprühen etc.) und nachfolgendes Entfernen des Dispergiermittels oder aber durch andere Methoden. Dabei sollte gewährleistet sein, daß die Polymerpartikel dauerhaft bzw. verläßlich, insbesondere abriebfest, mit den Trägerstrukturen verbunden sind. Für den Fall, daß die Beaufschlagung des Trägermaterials mit den Polymerpartikeln über geeignete Trägerstrukturen erfolgt, werden als Trägerstrukturen insbesondere diskrete Trägerpartikel, vorzugsweise in Kornform, besonders bevorzugt in zumindest im wesentlichen Kugelform, oder aber in Faserform (z. B. auch in Form von Flächengebilden, wie beispielsweise Gewebe, Gewirke, Gelege oder Verbundstoffe) verwendet; für die Polymerpartikel geeignete Trägerpartikel in Korn- oder Kugelform haben z. B. Teilchengrößen bzw. mittlere Durchmesser von insbesondere mindestens 0,1 mm und bis zu < 1,0 mm, vorzugsweise < 0,8 mm, bevorzugt < 0,6 mm. Gemäß einer besonders bevorzugten Ausführungsform der vorliegenden Erfindung sind - wie nachfolgend noch eingehend beschrieben - die Trägerstrukturen für die Polymerpartikel ein chemische Gifte adsorbierendes Adsorbens, insbesondere auf Basis von Aktivkohle, vorzugsweise in Form von Aktivkohleteilchen und/ oder Aktivkohlefasern.

Was die Menge der auf und/oder in dem Trägermaterial vorhandenen Polymerpartikel anbelangt, so kann diese in weiten Bereichen variieren. So kann die Menge der auf das Trägermaterial aufgebrachten Polymerpartikel 5 bis 500 g/m², insbesondere 10 bis 400 g/m², vorzugsweise 20 bis 300 g/m², bevorzugt 25 bis 250 g/m², besonders bevorzugt 50 bis 200 g/m², betragen. Gegebenenfalls kann aber von diesen Werten - je nach Anwendungsfall und sofern erfindungsgemäß erwünscht - abgewichen werden.

Erfindungsgemäß sind die Polymerpartikel keramische Nanopartikel, auf Silikatbasis. Die keramischen Nanopartikel können dabei organische Bestandteile, insbesondere organische Quervernetzungen und/oder organische funktionelle Gruppen, insbesondere wie nachfolgend beschrieben, enthalten.

Die Polymerpartikel weisen erfindungsgemäß ein anorganisch-organisches Polymer, insbesondere Hybridpolymer, auf, welches insbesondere ein mittels Gel/Sol-Verfahren hergestelltes anorganisch-organisches Hybridpolymer ist.

Das anorganisch-organische Polymer, insbesondere Hybridpolymer, weist sowohl anorganische als auch organische Struktureinheiten bzw. Netzwerkbestandteile auf. Insbesondere umfaßt das anorganisch-organische Polymer, insbesondere Hybridpolymer, ein anorganisches Silikatnetzwerk, welches gegebenenfalls organische Gruppen (z. B. funktionelle organische Gruppen) und/oder organische Quervernetzungen aufweisen kann.

Erfindungsgemäß umfaßt das anorganisch-organische Polymer, insbesondere Hybridpolymer, Siliciumalkoxide und/oder (Si-O-Si)-Einheiten. Die Siliciumalkoxide bzw. (Si-O-Si)-Einheiten können mittels Hydrolyse und Kondensation vernetzt sein, wobei auf diese Weise ein anorganisches Netzwerk bzw. ein anorganischer Netzwerkbestandteil bzw. anorganische Struktureinheiten ausgebildet werden; die für das anorganisch-organische Polymer, insbesondere Hybridpolymer, verwendeten Siliciumalkoxide bzw. die (Si-O-Si)-Einheiten können gemäß einer weiteren, bevorzugten Ausführungsform zudem organisch modifiziert sein: Beispielsweise können die organisch modifizierten Siliciumalkoxide bzw. die (Si-O-Si)-Einheiten mindestens einen vorzugsweise am Siliciumatom gebundenen organischen Rest aufweisen. Bei diesem organischen Rest kann es sich z. B. um einen polymerisierbaren Rest handeln, welcher vorzugsweise ausgewählt ist aus Acryl-, Vinyl-, Epoxygruppen und dergleichen; diese Beispiele sind jedoch nichtbeschränkend, vielmehr können im Rahmen der vorliegenden Erfindung eine Vielzahl polymerisierbarer organischer Reste eingesetzt werden, welche dem Fachmann als solche wohlbekannt sind. Die organischen Reste der Siliciumalkoxide bzw. die (Si-O-Si)-Einheiten können zur Ausbildung eines organischen Netzwerks bzw. eines organischen Netzwerkbestandteils bzw. von organischen Struktureinheiten des anorganisch-organischen Hybridpolymers dienen. Dabei kann zur Herstellung der anorganisch-organischen Hybridpolymere diese Polymerisation der organischen Reste in einem der Ausbildung des anorganischen Netzwerks nachfolgenden, zweiten Schritt erfolgen, wie nachfolgend noch geschildert.

Erfindungsgemäß ist es gemäß einer weiteren, alternativen Ausführungsform gleichermaßen möglich, daß das anorganisch-organische Hybridpolymer mit funktionellen, vorzugsweise nichtpolymerisationsfähigen Gruppen modifizierte Siliciumalkoxide bzw. (Si-O-Si)-Einheiten aufweist. Diesbezüglich kann die funktionelle, nichtpolymerisationsfähige Gruppe beispielsweise die erfindungsgemäß verwendete katalytisch aktive Komponente sein.

Die mit funktionellen, vorzugsweise nichtpolymerisationsfähigen Gruppen modifizierten Siliciumalkoxide bzw. (Si-O-Si)-Einheiten können alternativ aber auch zusammen mit mindestens einem polymerisierbaren organischen Rest versehenen Siliciumalkoxiden bzw. (Si-O-Si)-Einheiten vorliegen, wobei die nichtpolymerisationsfähigen Gruppen zwar nicht zur Ausbildung des organischen Netzwerks beitragen, sondern vielmehr die Funktionalität des erfindungsgemäß eingesetzten anorganisch-organischen Hybridpolymers gewährleisten - im Gegensatz zu den polymerisierbaren Gruppen, welche das organische Netzwerk ausbilden.

Was das anorganisch-organische Polymer bzw. Hybridpolymer betrifft, so können vorzugsweise zusätzlich zu den zuvor beschriebenen Silicumalkoxiden bzw. (Si-O-Si)-Einheiten außerdem Metalle bzw. Heteroatome, insbesondere Metallalkoxide bzw. (Me-O-Me)-Einheiten, im Polymer vorhanden sein, wobei es sich vorzugsweise, jedoch in nichtbeschränkender Weise, bei dem Metall um Kupfer, Silber, Cadmium, Platin, Palladium, Rhodium, Zink, Quecksilber, Titan, Zirkonium und/oder Aluminium handeln kann. Im Rahmen der vorliegenden Erfindung können die Metalle bzw. Heteroatome, insbesondere die Metallalkoxide, mit den zuvor genannten Siliciumalkoxiden bzw. (Si-O-Si)-Einheiten zwecks Herstellung bzw. Modifikation der anorganischen Struktureinheiten co-kondensiert sein. Die Metalle, insbesondere Metallalkoxide, können gleichermaßen polymerisationsfähige organische Gruppen, insbesondere wie zuvor definiert, und/oder nichtpolymerisationsfähige funktionelle organische Gruppen, insbesondere wie zuvor definiert, aufweisen.

Gemäß einer ersten, besonders bevorzugten Ausführungsform umfassen die Polymerteilchen ein anorganisch-organisches Hybridpolymer mit folgender schematischer Grundstruktur (I) 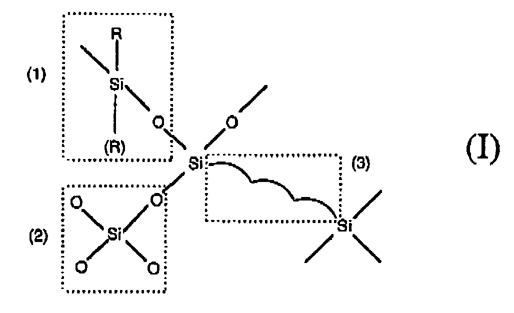 wobei die Grundstruktur (I) Struktureinheiten (1), (2) und/oder (3) umfassen kann,
wobei die Struktureinheit (1) einen anorganischen Netzwerkbestandteil darstellt, welcher mindestens einen vorzugsweise an ein Siliciumatom gebundenen Rest R und/oder (R) aufweist, insbesondere wobei der Rest R und/oder (R), identisch oder verschieden, jeweils eine funktionelle, vorzugsweise nichtpolymerisationsfähige organische Gruppe, wie zuvor definiert, darstellen;
wobei die Struktureinheit (2) einen Bestandteil des anorganischen Netzwerks auf Basis vernetzter Siliciumalkoxide und/oder auf Basis von vernetzten (Si-O-Si)-Einheiten darstellt; und
wobei die Struktureinheit (3) einen organischen Netzwerkbestandteil auf Basis organischer Quervernetzungen darstellt, insbesondere wobei die Struktureinheit (3) durch organische Quervernetzung von vorzugsweise jeweils an ein Siliciumatom gebundenen, polymerisierbaren organischen Resten, insbesondere wie zuvor definiert, resultieren kann.

Gemäß einer zweiten, alternativen, gleichermaßen besonders bevorzugten Ausführungsform umfassen die Polymerteilchen ein anorganisch-organisches Hybridpolymer mit folgender schematischer Grundstruktur (II) 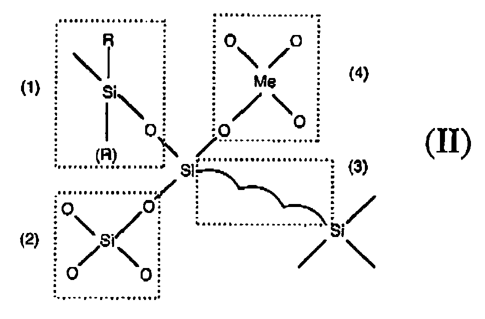 wobei die Grundstruktur Struktureinheiten (1), (2), (3) und/oder (4) umfassen kann,
wobei die Struktureinheiten (1), (2) und (3) die zuvor angegebene Definition aufweisen und
wobei die Struktureinheit (4) einen Bestandteil des anorganischen Netzwerks auf Basis vernetzter Metallalkoxide und/oder vernetzter (Me-O-Me)-Einheiten darstellt, insbesondere wobei als zuvor angeführte Metalle (Me) z. B. Cu, Ag, Cd, Pt, Pd, Rh, Zn, Hg, Ti, Zr und/oder Al eingesetzt werden können. Die Metalle können dabei die katalytisch aktive Komponente bzw. den Katalysator darstellen.

Gemäß einer erfindungsgemäß besonders bevorzugten Ausführungsform handelt es sich bei den erfindungsgemäß für die Polymerpartikel eingesetzten anorganisch-organischen Hybridpolymere um sogenannte Ormocere. Ormocer^{®} ist ein eingetragenes Warenzeichen der Fraunhofer Gesellschaft zur Förderung der angewandten Forschung e.V., München.

Die erfindungsgemäß eingesetzten anorganisch-organischen Hybridpolymere, insbesondere die Ormocere, eignen sich in besonderem Maße zur Verwendung im Rahmen der vorliegenden Erfindung, da durch die gezielte Auswahl bzw. Variation der jeweiligen Netzwerkbestandteile die physikalischen bzw. chemischen Polymereigenschaften bzw. -parameter gezielt gesteuert bzw. eingestellt werden können. Genauer gesagt, können die Eigenschaften der anorganisch-organischen Hybridpolymere, insbesondere der Ormocere, beispielsweise anhand der Ausgangsmaterialien, der Reaktionsbedingungen der anorganischen Polykondensationsreaktion sowie durch die Kontrolle von Verknüpfüngsreaktionen, die zum Aufbau des organischen Netzwerks führen, erfolgen. Hierdurch ist es möglich, spezielle anorganisch-organische Polymere gewissermaßen maßzuschneidem - beispielsweise im Hinblick auf gezielte Oberflächenvergrößerungen mit einer damit einhergehenden, verbesserten katalytischen Aktivität.

Durch den gezielten Einsatz von Siliciumalkoxiden mit spezifischen funktionellen Gruppen und Heteroatomen bzw. Metallen (z. B. Cu, Ag, Cd, Pt, Pd, Rh, Zn, Hg, Ti, Zr und/oder Al) kann im Rahmen der vorliegenden Erfindung eine katalytische Wirkung des anorganisch-organischen Hybridpolymers als solchem realisiert werden. Aufgrund der zuvor genannten Variationsmöglichkeiten bezüglich der Herstellung des anorganisch-organischen Hybridpolymers können die Härte, Elastizität, Dichte, Porosität, thermische Ausdehnung, Polarität, Strukturierbarkeit, Sensitivität gegenüber Gasen und Ionen etc. gezielt bzw. maßgeschneidert eingestellt werden.

Wie zuvor beschrieben, können die anorganisch-organischen Hybridpolymere, insbesondere die Ormocere, mittels eines zweistufigen Verfahrens hergestellt sein. Hierzu können in einem ersten Schritt die anorganischen Struktureinheiten, insbesondere die Siliciumalkoxide, mittels Hydrolyse und Kondensation gebildet werden. In einem nachfolgenden, zweiten Schritt können zum Aufbau der organischen Struktureinheiten mittels Polymerisation und/oder Quervernetzung insbesondere der organischen Reste der Siliciumalkoxide die anorganischen Struktureinheiten bzw. Netzwerkbestandteile zu einem organischen Netzwerk polymerisiert bzw. quervernetzt werden, so daß ein anorganisch-organisches Hybridpolymer resultiert, welches sowohl anorganische Netzwerkbestandteile als auch organische Netzwerkbestandteile aufweist. Die Ausbildung der anorganischen und der organischen Struktureinheiten kann in einer dem Fachmann bekannten Art und Weise erfolgen. Beispielsweise kann die Quervernetzung zur Ausbildung des organischen Netzwerkes mittels Ultraviolett- und/oder Infrarotbestrahlung, Lichtbestrahlung, radikalische Polymerisation etc. erfolgen.

Was das Einbringen der katalytisch aktiven Komponente in die erfindungsgemäße Einheit betrifft, so kann es erfindungsgemäß vorgesehen sein, daß die Polymerpartikel mit der katalytisch aktiven Komponente dotiert oder imprägniert sind: So kann z. B. die katalytisch aktive Komponente bei der Herstellung der Polymerpartikel bzw. der anorganisch-organischen Hybridpolymere in diese eingearbeitet werden, beispielsweise im Sinne eines Gemisches bzw. Gemenges, oder aber auch kovalent und/oder ionisch bei der Herstellung in das Netzwerk eingearbeitet sein. Gleichermaßen ist es aber auch möglich, daß die Polymerpartikel nach ihrer Herstellung mit der katalytisch aktiven Komponente versetzt werden, beispielsweise mittels Beschichtung oder dergleichen. Erfindungsgemäß ist es gleichermaßen möglich, daß die katalytisch aktive Komponente physikalisch oder vorzugsweise chemisch in und/oder an die Polymerpartikel bzw. in und/oder an das anorganisch-organische Hybridpolymer gebunden ist, beispielsweise wie zuvor beschrieben (z. B. als Metallalkoxid). So kann z. B. die katalytisch aktive Komponente einen funktionellen Bestandteil bzw. eine funktionelle Gruppe des zuvor beschriebenen Siliciumalkoxids darstellen.

Was die katalytisch aktive Komponente als solche betrifft, so kann es sich hierbei um eine Substanz handeln, die in der Lage ist, Gift-, Schad- bzw. Geruchsstoffe katalytisch zu zersetzen; diesbezüglich kann auf obige Ausführungen verwiesen werden. Beispiele für erfindungsgemäß geeignete katalytisch aktive Komponenten sind beispielsweise und in nichtbeschränkender Weise Enzyme oder katalytisch aktive Komponenten auf Basis von Metallen bzw. Metallionen bzw. Metallverbindungen, vorzugsweise Kupfer, Silber, Cadmium, Platin, Palladium, Rhodium, Zink, Quecksilber, Titan, Zirkonium und/ oder Aluminium, insbesondere deren Ionen und/oder Salze. Erfindungsgemäß bevorzugt werden Kupfer-, Silber-, Cadmium-, Platin-, Palladium-, Rhodium-, Zink-, Quecksilber-, Titan-, Zirkonium- und/oder Aluminiumionen verwendet. Katalytisch aktive Komponenten im Sinne der vorliegenden Erfindung umfassen aber auch saure oder basische Verbindungen, insbesondere auf Basis von Phosphorsäure, Calciumcarbonat, Trimethanolamin, 2-Amino-1,3-propandiol oder Schwefel.

Die Menge an katalytisch aktiver Komponente kann in weiten Bereichen variieren. Insbesondere kann sie 0,01 bis 30 Gew.-%, vorzugsweise 0,1 bis 20 Gew.-%, besonders bevorzugt 1 bis 15 Gew.-%, ganz besonders bevorzugt 1 bis 10 Gew.-%, bezogen auf das Gewicht der Polymerpartikel, betragen.

Die vorgenannten Katalysatoren bzw. katalytisch aktiven Komponenten sind in der Lage, Gift-, Schad- und Geruchsstoffe in effektiver Weise katalytisch zu zersetzen, so daß diese unschädlich gemacht werden. Aufgrund des speziellen Einsatzes dieser Katalysatoren, insbesondere in Verbindung mit zuvor definierten anorganisch-organischen Hybridpolymeren, vorzugsweise Ormoceren, welche insbesondere in Form von erfindungsgemäß eingesetzten Nanopartikeln über eine große Oberfläche verfügen, wird erfindungsgemäß eine äußerst leistungsfähige katalytisch aktive Einheit bereitgestellt, welche toxische bzw. geruchsintensive Substanzen chemisch zersetzen und somit unschädlich machen kann.

Die hervorragende katalytische Wirkung der katalytisch aktiven Einheit nach der vorliegenden Erfindung kann anhand der folgenden Reaktionsprozesse exemplarisch veranschaulicht werden:
a) Beispielsweise kann Blausäure mittels Kupferkatalysatoren unter folgender Reaktionsgleichung zerstört werden:

   Cu₂O + 2 HCN → 2 CuCN + H₂O
b) Blausäure kann aber auch mit Hilfe von Zinkverbindungen beseitigt werden:

   ZnO + 2 HCN → Zn(CN₂) + H₂O
c) Chlorcyan C1CN, welches ein nerven- und blutschädigendes Gas darstellt, wird beispielsweise an Kupfersalzen chemiesorbiert und dann unter Einfluß von Schwermetallen durch adsorbiertes Wasser hydrolysiert:

   ClCN + 2 H₂O → NH₄Cl + CO₂

   Das sich aus Ammonchlorid durch Hydrolyse bildende Ammoniak wird von Kupfersalzen unter Komplexbildung gebunden.
d) Phosgen COCl₂ ist empfindlich gegen Hydrolyse, die besonders unter dem Einfluß von Metallsalzkatalysatoren (z B. MeO mit Me = Metall) abläuft; die Salzsäure wird von dem Katalysator neutralisiert:

   COCl₂ + H₂O → 2 HCl + CO₂

   MeO + 2 HCl → MeCl₂ + H₂O
e) Arsenwasserstoff (AsH₃) wird unter der katalytischen Verbindung von Silberverbindungen durch Luftsauerstoff oxidiert.

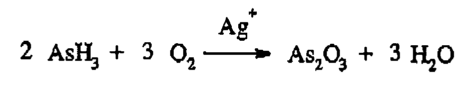

Erfindungsgemäß ist es vorgesehen, daß die katalytisch aktive Einheit - neben den mit mindestens einer katalytisch aktiven Komponente versehenen Polymerpartikeln - zusätzlich ein chemische Gifte adsorbierendes Adsorbens auf Basis von Aktivkohle umfaßt, beispielsweise in Form von Aktivkohleteilchen bzw. Aktivkohlefasern.

Das Adsorbens kann an dem Trägermaterial, insbesondere mittels Verkleben, befestigt sein, wobei die zuvor in bezug auf die Polymerpartikel genannten Klebstoffe und Klebstoffmengen entsprechend eingesetzt werden können. Wie bereits in bezug auf die Polymerpartikel, so sollte auch hinsichtlich der Adsorbenspartikel gewährleistet sein, daß die Adsorbenspartikel zu mindestens 50 %, insbesondere zu mindestens 60 %, vorzugsweise zu mindestens 70 %, für Gase zugänglich sind.

Was die Aktivkohle betrifft, so kann diese beispielsweise aus diskreten Aktivkohleteilchen, vorzugsweise in Kornform ("Kornkohle"), bestehen. In diesem Fall beträgt der mittlere Durchmesser der Aktivkohleteilchen vorzugsweise weniger als 1,0 mm, insbesondere weniger als 0,8 mm, bevorzugt weniger als 0,6 mm, beträgt jedoch im allgemeinen mindestens 0,1 mm. Gemäß dieser Ausführungsform sind die Aktivkohleteilchen in einer Menge von 5 bis 500 g/m², insbesondere 10 bis 400 g/m², vorzugsweise 20 bis 300 g/m², bevorzugt 25 bis 250 g/m², besonders bevorzugt 50 bis 150 g/m², ganz besonders bevorzugt 50 bis 100 g/m², auf das Trägermaterial aufgebracht. Geeignete Aktivkohleteilchen weisen eine innere Oberfläche (BET) von mindestens 800 m²/g, insbesondere von mindestens 900 m²/g, vorzugsweise von mindestens 1.000 m²/g, bevorzugt im Bereich von 800 bis 2.500 m²/g, auf. Kornkohle, insbesondere Kugelkohle, hat den entscheidenden Vorteil, daß sie enorm abriebfest und sehr hart ist, was in bezug auf die Verschleißeigenschaften von großer Bedeutung ist. Bevorzugterweise beträgt der Berstdruck für ein einzelnes Aktivkohleteilchen, insbesondere Aktivkohlekörnchen bzw. -kügelchen, mindestens 5 Newton, insbesondere mindestens 10 Newton, und kann bis zu 20 Newton erreichen.

Gemäß einer alternativen Ausführungsform kann die erfindungsgemäße katalytische Einheit, insbesondere das Trägermaterial, mit Aktivkohlefasern, insbesondere in Form eines Aktivkohleflächenmaterials, versehen oder beaufschlagt sein. Derartige Aktivkohleflächenmaterialien können beispielsweise ein Flächengewicht von 10 bis 300 g/m², insbesondere 20 bis 200 glm², vorzugsweise 30 bis 150 g/m², aufweisen. Bei dem Aktivkohleflächenmaterial kann es sich beispielsweise um ein Aktivkohlefasergewebe, -gewirke, -gelege oder -verbundstoff insbesondere auf Basis von carbonisierter und aktivierter Cellulose bzw. eines carbonisierten und aktivierten Acrylnitrils handeln.

Gleichermaßen ist es auch möglich, Aktivkohleteilchen und Aktivkohlefasern miteinander zu kombinieren. Aktivkohleteilchen haben den Vorteil einer höheren Adsorptionskapazität, während Aktivkohlefasern eine bessere Adsorptionskinetik aufweisen.

Zur Erhöhung der Adsorptionseffizienz bzw. Adsorptionsleistung besteht die Möglichkeit, auch die Adsorbentien mit mindestens einem Katalysator zu imprägnieren. Erfindungsgemäß geeignete Katalysatoren sind beispielsweise die zuvor genannten Substanzen. Die Menge an Katalysator kann in weiten Bereichen variieren; im allgemeinen beträgt sie 0,05 bis 12 Gew.-%, vorzugsweise 1 bis 10 Gew.-%, besonders bevorzugt 2 bis 8 Gew.-%, bezogen auf das Gewicht des Adsorbens.

Der Vorteil der erfindungsgemäßen Kombination von adsorptionsfähigen Teilchen bzw. Adsorbentien einerseits und der katalytisch aktiven Komponente (d. h. Polymerteilchen mit katalytisch aktiver Komponente) andererseits ist darin zu sehen, daß sich diese jeweiligen Bestandteile hinsichtlich der Entfernung von Kampf-, Gift-, Geruchs- und/oder Schadstoffen gewissermaßen gegenseitig verstärken: Denn durch die katalytisch aktive Komponente wird einerseits bereits ein Teil der Schadstoffe zersetzt, so daß die Aktivkohle hinsichtlich ihrer Adsorptionsfähigkeit entlastet wird. Andererseits wird durch die Adsorption der Aktivkohle eine Überlastung bzw. Überfrachtung der katalytisch aktiven Komponente mit den zu entfernenden Substanzen vermieden, so daß insgesamt in überraschend synergistischer Weise Gift-, Kampf-, Geruchs- und Schadstoffe eliminiert werden können, so daß gemäß dieser Ausführungsform insgesamt ein äußerst leistungsfähiges System zur Entfernung von derartigen Substanzen resultiert.

Gemäß einer besonderen Ausführungsform der vorliegenden Erfindung kann, wie zuvor beschrieben, das chemische Gifte adsorbierende Adsorbens auf Basis von Aktivkohle, vorzugsweise Aktivkohleteilchen und/oder Aktivkohlefasern, als Trägerpartikel für die Polymerpartikel dienen, wobei die Polymerpartikel an die Adsorbentien fixiert bzw. hierauf aufgebracht sind (z. B. durch Aufsprühen von Dispersionen, Imprägnieren etc., wie zuvor beschrieben), wobei die Adsorbentien wiederum auf dem Trägermaterial aufgebracht bzw. hieran befestigt sind.

Die erfindungsgemäße katalytisch aktive Einheit als solche weist zahlreiche Vorteile auf, von denen rein beispielhaft die vorliegenden genannt werden sollen:
- So zeichnet sich die erfindungsgemäße katalytisch aktive Einheit dadurch aus, daß sie bei einem nur geringen Flächengewicht über eine große katalytische Aktivität verfügt, was auch durch die große Oberfläche in einem kleineren Volumen der erfindungsgemäß verwendeten Polymerpartikel, insbesondere der polymeren Nanopartikel, gewährleistet ist.
- Die katalytisch aktiven Komponenten können beispielsweise bei der Herstellung der Polymere direkt in diese eingearbeitet werden, so daß eine nachträgliche, aufwendige Beaufschlagung der katalytisch aktiven Einheit mit der katalytisch aktiven Komponente entfallen kann. Durch die chemische und/oder physikalische Bindung insbesondere an die Polymerpartikel ist der Katalysator fest an dem Trägermaterial gebunden bzw. fixiert, so daß die erfindungsgemäße katalytisch aktive Einheit sehr beständig bzw. widerstandsfähig ist.
- Die erfindungsgemäße katalytisch aktive Einheit zeichnet sich durch eine exzellente katalytische Aktivität in bezug auf zu entfernende Schad-, Gift- und Geruchsstoffe aus. Aufgrund der gezielt einstellbaren katalytischen Eigenschaften infolge der individuellen Konfektionierung der Katalysatoren eignet sich die erfindungsgemäße katalytisch aktive Einheit zur katalytischen Eliminierung bzw. Zersetzung einer großen Anzahl an Schad-, Gift- und Geruchsstoffen und ist somit nahezu universell einsetzbar.
- Der Natur des Katalysators nach ist die katalytisch aktive Komponente quasi unerschöpfbar, so daß die erfindungsgemäße katalytische Einheit über einen sehr langen Zeitraum ohne Aktivitätsverlust eingesetzt werden kann. Daher ist die erfindungsgemäße katalytische Einheit aufgrund seiner sehr langen Anwendungszeit äußerst kostengünstig, da sie nicht häufig ersetzt werden muß.
- Die Schutzfunktion gegenüber Schad-, Gift- und Geruchsstoffen kann durch die zusätzliche Anwesenheit von adsorptionsfähigem Material, wie Aktivkohle, verbessert werden, wobei diesbezüglich sogar eine synergistische Wirkung vorliegt, da sich - wie zuvor geschildert - die katalytisch aktive Komponente einerseits und das Adsorbens andererseits hinsichtlich ihrer Wirkung optimal ergänzen.
- Erfindungsgemäß kann auf eine zusätzliche Imprägnierung der gegebenenfalls vorhandenen Aktivkohle mit Katalysatoren verzichtet werden, so daß dieser aufwendige und kostenintensive Verfahrensschritt entfallen kann, da bereits die katalytisch aktive Komponente enthalten ist; zudem ist ein Imprägnieren der Aktivkohle selbst oftmals mit einem "Verstopfen" der Mikroporen der Aktivkohle verbunden, was zu einen signifikanten Aktivitätsverlust der Aktivkohle führen kann.

Ein weiterer Gegenstand der vorliegenden Erfindung - gemäß einem **zweiten** Aspekt der vorliegenden Erfindung - ist die Verwendung der erfindungsgemäßen katalytisch aktiven Einheit zur Herstellung von Schutzmaterialien aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz. Die mit der erfindungsgemäßen katalytisch aktiven Einheit hergestellten Schutzmaterialien weisen neben einer hohen Schutzfunktion gegen Schad-, Gift- und Geruchsstoffen gleichzeitig einen hohen Tragekomfort auf, da die erfindungsgemäße katalytisch aktive Einheit in hohem Maße luft- und wasserdampfdurchlässig ausgebildet sein kann.

Ein weiterer Gegenstand der vorliegenden Erfindung - gemäß einem dritten Aspekt der vorliegenden Erfindung - ist die Verwendung der erfindungsgemäßen katalytisch aktiven Einheit zur Herstellung von Filtern und Filtermaterialien aller Art, insbesondere zur Entfernung von Schad-, Geruchs- und Giftstoffen aller Art, insbesondere aus Luft- bzw. Gasströmen, insbesondere ABC-Schutzmaskenfilter, Geruchsfilter, Flächenfilter, Luftfiltern, Filter für die Raumluftreinigung, adsorptionsfähige Trägerstrukturen und Filter für den medizinischen Bereich.

Ein weiterer Gegenstand der vorliegenden Erfindung - gemäß einem vierten Aspekt der vorliegenden Erfindung - sind Schutzmaterialien aller Art, insbesondere Schutzbekleidung, insbesondere für den zivilen oder militärischen Bereich, wie Schutzanzüge, Schutzhandschuhe, Schutzschuhwerk, Schutzsocken, Kopfschutzbekleidung und dergleichen, und Schutzabdeckungen aller Art, vorzugsweise alle vorgenannten Schutzmaterialien für den ABC-Einsatz, welche unter Verwendung der erfindungsgemäßen katalytisch aktiven Einheit hergestellt sind bzw. die katalytisch aktive Einheit nach der Erfindung aufweisen.

Schließlich sind ein weiterer Gegenstand der vorliegenden Erfindung - gemäß einem weiteren Aspekt der vorliegenden Erfindung - Filter und Filtermaterialien aller Art, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, welche unter Verwendung der erfindungsgemäßen katalytisch aktiven Einheit hergestellt sind oder die katalytisch aktive Einheit nach der Erfindung aufweisen.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

## Patentansprüche

1. Katalytisch aktive Einheit, umfassend ein textiles Flächenmaterial als Trägermaterial, wobei das Trägermaterial Polymerpartikel umfaßt und/oder mit Polymerpartikeln beaufschlagt ist,
wobei die Polymerpartikel mindestens eine katalytisch aktive Komponente, ausgewählt aus Enzymen und/oder Metallen und/oder deren Ionen und/oder Salzen, umfassen und wobei die Polymerpartikel mindestens ein anorganisch-organisches Hybridpolymer umfassende polymere Nanopartikel mit einem Durchmesser von 1 nm bis 1.000 nm sind, wobei das anorganisch-organische Hybridpolymer sowohl anorganische als auch organische Struktureinheiten aufweist und ein organische Quervernetzungen und/oder organische Gruppen aufweisendes anorganisches Silikatnetzwerk mit Siliciumalkoxiden und/oder (Si-O-Si)-Einheiten umfaßt, und
wobei die katalytische Einheit zusätzlich ein chemische Gifte adsorbierendes Adsorbens auf Basis von Aktivkohle, insbesondere in Form von Aktivkohleteilchen oder Aktivkohlefasern, umfaßt.

2. Katalytisch aktive Einheit nach Anspruch 1, **dadurch gekennzeichnet, daß** das Trägermaterial ein Gewebe, Gewirke, Gestricke, Gelege, Textilverbundstoff, vorzugsweise ein Vlies, oder ein Nonwoven, ist, insbesondere wobei das Trägermaterial ein Flächengewicht von 25 bis 500 g/m², insbesondere 30 bis 250 g/m², vorzugsweise 35 bis 200 g/m², aufweist.

3. Katalytisch aktive Einheit nach Anspruch 1 oder 2, **dadurch gekennzeichnet, daß** die Polymerpartikel einen Durchmesser von 5 nm bis 900 nm, vorzugsweise 10 nm bis 800 nm, bevorzugt 50 nm bis 700 nm, besonders bevorzugt 75 nm bis 600 nm, ganz besonders bevorzugt 100 nm bis 500 nm, aufweisen

4. Katalytisch aktive Einheit nach einem oder mehreren der vorangehenden Ansprüche, **dadurch gekennzeichnet, daß** die Polymerpartikel in einer Menge von 5 bis 500 g/m², insbesondere 10 bis 400 g/m², vorzugsweise 20 bis 300 g/m², bevorzugt 25 bis 250 g/m², besonders bevorzugt 50 bis 200 g/m², auf das Trägermaterial aufgetragen sind.

5. Katalytisch aktive Einheit nach einem oder mehreren der vorangehenden Ansprüche, **dadurch gekennzeichnet, daß** die Polymerpartikel keramische Nanopartikel sind.

6. Katalytisch aktive Einheit nach einem oder mehreren der vorangehenden Ansprüche, **dadurch gekennzeichnet, daß** die Siliciumalkoxide und/oder (Si-O-Si)-Einheiten organisch modifiziert sind, insbesondere wobei die organisch modifizierten Siliciumalkoxide und/oder die (Si-O-Si)-Einheiten mindestens einen vorzugsweise am Siliciumatom gebundenen organischen Rest aufweisen, insbesondere wobei der organische Rest ein polymerisierbarer organischer Rest, vorzugsweise ausgewählt aus Acryl-, Vinyl-, Epoxygruppen und dergleichen, ist und/oder daß die Siliciumalkoxide und/oder (Si-O-Si)-Einheiten mit funktionellen, vorzugsweise nichtpolymerisationsfähigen organischen Gruppen modifiziert sind, insbesondere wobei die funktionellen, vorzugsweise nichtpolymerisationsfähigen Gruppen die katalytisch aktive Komponente umfassen.

7. Katalytisch aktive Einheit nach einem oder mehreren der vorangehenden Ansprüche, **dadurch gekennzeichnet daß** die Polymerpartikel die katalytisch aktive Komponente enthalten, insbesondere wobei die Polymerpartikel mit der katalytisch aktiven Komponente dotiert und/oder imprägniert sind und/oder insbesondere wobei die katalytisch aktive Komponente chemisch und/oder physikalisch an die Polymerpartikel, insbesondere an ein anorganisch-organische Hybridpolymer, insbesondere wie zuvor definiert, gebunden ist und/oder daß die katalytisch aktive Komponente ausgewählt ist aus Kupfer, Silber, Cadmium, Platin, Palladium, Rhodium, Zink, Quecksilber, Titan, Zirkonium und/oder Aluminium und/oder daß die Menge an katalytisch aktiver Komponente 0,01 bis 30 Gew.-%, vorzugsweise 0,1 bis 20 Gew.-%, besonders bevorzugt 1 bis 15 Gew.-%, ganz besonders bevorzugt 1 bis 10 Gew.-%, bezogen auf das Gewicht der Polymerpartikel, beträgt.

8. Verwendung einer katalytisch aktiven Einheit nach einem der Ansprüche 1 bis 7 zur Herstellung von Schutzmaterialien aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz, oder zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

9. Schutzmaterialien aller Art, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzmaterialien für den ABC-Einsatz, hergestellt unter Verwendung einer katalytisch aktiven Einheit nach einem der Ansprüche 1 bis 7 und/oder aufweisend eine katalytische Einheit nach einem der Ansprüche 1 bis 7.

10. Filter und Filtermaterialien aller Art, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung einer katalytisch aktiven Einheit nach einem der Ansprüche 1 bis 7 und/oder aufweisend eine katalytische Einheit nach einem der Ansprüche 1 bis 7.

## Claims

1. A catalytically active unit, comprising a textile surface material as a carrier material, the carrier material comprising polymer particles and/or being charged with polymer particles,
wherein the polymer particles comprise at least one catalytically active component, selected from enzymes and/or materials and/or the ions and/or salts thereof, and wherein the polymer particles are polymer nanoparticles comprising at least one inorganic/organic hybrid polymer, having a diameter of 1 nm to 1,000 nm, wherein the inorganic/organic hybrid polymer has both inorganic and organic structural units, and comprises an inorganic silicate network having organic crosslinks and/or organic groups, together with silicon alkoxides and/or (Si-O-Si) units, and
wherein the catalytic unit additionally comprises an adsorption agent adsorbing chemical toxins on the basis of activated carbon, in particular in the form of active carbon particles, or active carbon fibers.

2. The catalytically active unit according to claim 1, **characterized in that** the carrier material is a cloth, knitted fabric, knit, fabric, nonwoven fabric, preferably a nonwoven material, or a nonwoven, in particular wherein the carrier material has a grammage of 25 to 500 g/m², in particular 30 to 250 g/m², preferably 35 to 200 g/m².

3. The catalytically active unit according to claims 1 or 2, **characterized in that** the polymer particles have a diameter of 5 nm to 900 nm, preferably 10 nm to 800 nm, preferably 50 nm to 700 nm, particularly preferred 75 nm to 600 nm, especially preferred 100 nm to 500 nm.

4. The catalytically active unit according to one or more of the previous claims, **characterized in that** the polymer particles are applied onto the carrier material at an amount of 5 to 500 g/m², in particular 10 to 400 g/m², preferably 20 to 300 g/m², more preferably 25 to 250 g/m², most preferred 50 to 200 g/m².

5. The catalytically active unit according to one or more of the previous claims, **characterized in that** the polymer particles are ceramic nanoparticles.

6. The catalytically active unit according to one or more of the previous claims, **characterized in that** the silicon alkoxides and/or the (Si-O-Si) units are organically modified, in particular wherein the organically modified silicon alkoxide and/or the (Si-O-Si) units have at least one organic residue preferably bound to the silicon atom, in particular wherein the organic residue is polymerizable organic residue, preferably selected from acryl, vinyl, epoxy groups, or the like, and/or that the silicon alkoxides and/or the (Si-O-Si) units are modified with functional, preferably non-polymerizable organic groups, in particular wherein the functional, preferably non-polymerizable groups comprise the catalytically active component.

7. The catalytically active unit according to one or more of the previous claims, **characterized in that** the polymer particles contain the catalytically active component, in particular wherein the polymer particles are doped and/or impregnated with the catalytically active component, and/or in particular wherein the catalytically active component is chemically and/or physically bound to the polymer particles, in particular to an inorganic/organic hybrid polymer, in particular as defined above, and/or that the catalytically active component is selected from copper, silver, cadmium, platinum, palladium, rhodium, zinc, mercury, titanium, zirconium, and/or aluminum, and/or that the amount of catalytically active component is 0.01 to 30% by weight, preferably 0.1 to 20% by weight, particularly preferred 1 to 15% by weight, more particularly preferred 1 to 10% by weight, based on the weight of the polymer particles.

8. A use of a catalytically active unit according to one of the claims 1 to 7, for the production of protective materials of all types, in particular of protective clothing, in particular for the civil or military industries, such as protective suits, protective gloves, protective shoes, protective socks, head protection, and the like, and of protective coverings of all types, preferably all protective materials named above for ABC use, or for the production of filters and filter materials of all types, in particular for the removal of contaminants, odors, and toxins of all types, in particular from air and/or gas flows, such as ABC protective mask filters, odor removal filters, surface filters, air filters, in particular filters for air conditioners, adsorptive carrier structures, and filters for the medical industry.

9. Protective materials of all types, in particular for the civil or military industries, in particular protective clothing, such as protective suits, protective gloves, protective shoes, protective socks, head protection, and the like, as well as protective covers, preferably all protective materials named above for ABC use, produced using a catalytically active unit according to one of the claims 1 to 7, and/or having a catalytic unit according to one of the claims 1 to 7,

10. Filter and filter materials of all types, in particular for the removal of contaminants, odors, and toxins of all types, in particular from air and/or gas flow, such as ABC protective mask filters, odor removal filters, surface filters, air filters, in particular filters for air conditioners, adsorptive carrier structures, and filters for the medical industry, produced using a catalytically active unit according to one of the claims 1 to 7, and/or having a catalytic unit according to one of the claims 1 to 7.

## Revendications

1. Unité catalytiquement active, comprenant un matériau bidimensionnel textile comme matériau support, le matériau support comprenant des particules de polymère et/ou étant garni de particules de polymère,
dans lequel les particules de polymère comprennent au moins un composant catalytiquement actif, choisi parmi des enzymes et/ou des métaux et/ou de leur ions et/ou de leurs sels, et dans lequel les particules de polymère sont des nanoparticules polymères, comprenant au moins un polymère hybride inorganique/organique, d'un diamètre de 1 nm à 1000 nm, le polymère hybride inorganique/organique comportant des unités de structure aussi bien inorganiques qu'organiques et comprenant un réseau inorganique de silicates avec des unités alcoxydes et/ou (Si-O-Si), comportant des réticulations transversales organiques et/ou des groupes organiques et
dans lequel l'unité catalytique comprend en plus un adsorbant à base de charbon actif, qui adsorbe les poisons chimiques, en particulier sous la forme de particules de charbon actif ou de fibres de charbon actif.

2. Unité catalytiquement active selon la revendication 1, **caractérisée en ce que** le matériau support est un tissu tissé, un tissu maillé, un tricot, un tissu à couches de fibres croisées, un composite de textile, de préférence un voile, ou un non-tissé, le matériau support présentant en particulier un poids surfacique de 25 à 500 g/m², en particulier de 30 à 250 g/m², de préférence de 35 à 200 g/m²_{.}

3. Unité catalytiquement active selon la revendication 1 ou 2, **caractérisée en ce que** les particules de polymère présentent un diamètre de 5 nm à 900 nm, de préférence 10 nm à 800 nm, plus préférablement de 50 nm à 700 nm, encore plus préférablement de 75 mn, à 600 nm, de façon particulièrement préférée de 100 nm à 500 nm.

4. Unité catalytiquement active selon l'une ou plusieurs des revendications précédentes, **caractérisée en ce que** les particules de polymère sont appliquées sur le matériau support en une quantité de 5 à 500 g/m², en particulier de 10 à 400 g/m², de préférence de 20 à 300 g/m², encore plus préférablement de 25 à 250 g/m², de façon particulièrement préférée de 50 à 200 g/m²,

5. Unité catalytiquement active selon l'une ou plusieurs des revendications précédentes, **caractérisée en ce que** les particules de polymère sont des nanoparticules de céramique.

6. Unité catalytiquement active selon l'une ou plusieurs des revendications précédentes, **caractérisée en ce que** les unités d'alcoxyde de silicium et/ou de (Si-O-Si) sont modifiées organiquement, en particulier **en ce que** les unités organiquement modifiées d'alcoxyde de silicium et/ou de (Si-O-Si) comportent au moins un radical organique lié de préférence à l'atome de silicium, le radical organique étant en particulier un radical organique polymérisable, choisi de préférence parmi les groupes acryle, vinyle, époxyde et similaire, et/ou **en ce que** les unités d'alcoxyde de silicium et/ou de (si-O-Si) sont modifiées par des groupes organiques fonctionnels de préférence non polymérisables, en particulier **en ce que** les groupes organiques fonctionnels de préférence non polymérisables comprennent les composants catalytiquement actifs.

7. Unité catalytiquement active selon l'une ou plusieurs des revendications précédentes, **caractérisée en ce que** les particules de polymère contiennent le composant catalytiquement actif les particules de polymère étant en particulier dopées et/ou imprégnées du composant catalytiquement actif, et/ou le composant catalytiquement actif étant en particulier liée chimiquement et/ou physiquement à la particule de polymère, en particulier à un polymère hybride inorganique/organique, en particulier comme défini précédemment, et/ou **en ce que** le composant catalytiquement actif est choisi parmi le cuivre, l'argent, le cadmium, le platine, le palladium, le rhodium, le zinc, le mercure, le titane, le zirconium et/ou l'aluminium, et/ou **en ce que** la quantité de composant catalytiquement actif est de 0,01 à 30 % en poids, de préférence de 0,1 à 20 % en poids, encore plus préférablement de 1 à 15 % en poids, de façon particulièrement préférée de 1 à 10 % en poids, rapportés au poids des particules de polymère.

8. Utilisation d'une unité catalytiquement active selon l'une quelconque des revendications 1 à 7 à la fabrication de matériaux de protection de toutes sortes, en particulier de vêtements de protection, en particulier pour le secteur civil ou militaire, comme des complets de protection, des gants de protection, des chaussures de protection, des chaussettes de protection, des coiffures de protection et similaires, et de couvertures de protection de toutes sortes, en particulier tous les matériaux de protection précités pour l'emploi dans un contexte ABC, ou pour la fabrication de filtres et de matériaux filtrants de toutes sortes, en particulier pour l'élimination de substances nuisibles, malodorantes ou toxiques de toutes sortes, en particulier depuis des écoulements d'air et/ou de gaz, comme des filtres de masques de protection ABC, des filtres d'odeurs, des filtres en surface, des filtres à air, en particulier des filtres pour l'épuration de l'air ambiant, des structures porteuses capables d'adsorption et des filtres pour le secteur médical.

9. Matériaux de protection de toutes sortes, en particulier pour le secteur civil ou militaire, en particulier vêtements de protection comme des complets de protection, des gants de protection, des chaussures de protection, des chaussettes de protection, des coiffures de protection et similaires, ainsi que couvertures de protection, en particulier tous les matériaux de protection précités pour l'emploi dans un contexte ABC, fabriqués moyennant l'utilisation d'une unité catalytiquement active selon l'une quelconque des revendications 1 à 7 et/ou comportant une unité catalytiquement active selon l'une quelconque des revendications 1 à 7.

10. Filtres et matériaux filtrantes de toutes sortes, en particulier pour l'élimination de substances nuisibles, malodorantes ou toxiques de toutes sortes, en particulier depuis des écoulements d'air et/ou de gaz, comme des filtres de masques de protection ABC, des filtres d'odeurs, des filtres en surface, des filtres à air, en particulier des filtres pour l'épuration de l'air ambiant, des structures porteuses capables d'adsorption et des filtres pour le secteur médical, fabriqués moyennant l'utilisation d'une unité catalytiquement active selon l'une quelconque des revendications 1 à 7 et/ou comportant une unité catalytiquement active selon l'une quelconque des revendications 1 à 7.
